# EUROPÄISCHE PATENTSCHRIFT

(11) **EP 1 621 733 B1**
(45) Veröffentlichungstag und Bekanntmachung des Hinweises auf die Patenterteilung: **01.03.2017**
(21) Anmeldenummer: 05015705.6
(22) Anmeldetag: 20.07.2005
(51) Int. Cl.: F01D 9/02, F01D 5/14, F01D 9/04

(54) **Strömungsstruktur für einen Übergangskanal einer Gasturbine**
Transition channel of a gas turbine
Conduit de transition pour une turbine à gaz

(30) Priorität: 28.07.2004 DE 102004036594
(43) Veröffentlichungstag der Anmeldung: 01.02.2006
(73) Patentinhaber: MTU Aero Engines AG, 80995 München (DE)
(72) Erfinder: Hoeger, Martin, dr., 85435 Erding (DE); Malzacher, Franz, 82194 Gröbenzell (DE)

(56) Entgegenhaltungen:
- EP-A2- 0 942 150
- EP-A2- 0 997 612
- GB-A- 2 004 329
- GB-A- 2 115 881
- GB-A- 2 226 600
- US-A- 3 704 075

## Beschreibung

Die Erfindung betrifft eine Strömungsstruktur für einen Übergangskanal einer Gasturbine, gemäß dem Oberbegriff des Patentanspruchs 1.

Gasturbinen, wie Flugtriebwerke, verfügen in der Regel über mehrere Verdichter, mehrere Turbinen und eine Brennkammer. Bei den mehreren Verdichtern handelt es sich in der Regel um einen Niederdruckverdichter sowie um einen Hochdruckverdichter, bei den mehreren Turbinen um eine Hochdruckturbine sowie Niederdruckturbine. Die Gasturbine wird in axialer Richtung durchströmt, wobei der Niederdruckverdichter stromaufwärts des Hochdruckverdichters und die Hochdruckturbine stromaufwärts der Niederdruckturbine positioniert ist. Vom Niederdruckverdichter gelangt die Strömung in den Hochdruckverdichter durch einen Übergangskanal zwischen diesen beiden Verdichtern. Ebenso ist zwischen der Hochdruckturbine und der Niederdruckturbine ein solcher Übergangskanal positioniert.

Aus dem Stand der Technik ist es bereits bekannt, in solchen Übergangskanälen zwischen zwei Verdichtern oder zwei Turbinen in Ümfangsrichtung des Übergangskanals voneinander beabstandete Stützrippen anzuordnen. Die Stützrippen dienen dabei der Durchführung von zum Beispiel Ölleitungen und Sensoren sowie der Aufnahme von Kräften, weshalb die Stützrippen relativ dick ausgeführt sind. Aus dem Stand der Technik sind Stützrippen bekannt, die zwar strömungsführend jedoch nicht strömungsumlenkend ausgebildet sind. Des weiteren sind bereits Stützrippen bekannt, die über eine Saugseite sowie eine Druckseite verfügen und daher auch die Funktion einer Strömungsumlenkung übernehmen. Insbesondere bei strömungsumlenkenden Stützrippen besteht aufgrund des kleinen Höhenverhältnisses sowie der relativ großen Dicke der Stützrippen die Gefahr von Strömungsablösungen sowie die Gefahr der Ausbildung von Sekundärströmungen, was letztendlich zu hohen Strömungsverlusten führt. Des weiteren ergibt sich hieraus eine schlechte Anströmqualität der dem Übergangskanal in Strömungsrichtung nachgeordneten Komponenten.

Aus dem Dokument EP 0 942 150 A2 ist eine Strömungsstruktur für einen Übergangskanal einer Gasturbine bekannt, bei der zwischen jeweils zwei benachbarten Stützrippen mehrere Leitrippen positioniert sind, wobei die Strömungsaustrittskanten der Leitrippen stromaufwärts der Strömungsaustrittskanten der Stützrippen verlaufen. Mit dieser Struktur lässt sich die Gefahr von Strömungsablösungen verringern.

Hiervon ausgehend liegt der vorliegenden Erfindung das Problem zu Grunde, eine weiter verbesserte Strömungsstruktur für einen Übergangskanal einer Gasturbine zu schaffen.

Dieses Problem wird durch eine Strämungsstruktur für einen Übergangskanal einer Gasturbine gemäß Patentanspruch 1 gelöst. Erfindungsgemäß verläuft die Strömungseintrittskante der oder jeder, zwischen zwei benachbarten Stützrippen positionierten Leitrippe stromaufwärts der Strömungseintrittskanten der Stützrippen.

Mithilfe der erfindungsgemäßen Strömungsstruktur ergibt sich innerhalb des Übergangskanals eine optimierte Strömung, wobei die Gefahr der Ausbildung von Strömungsablösungen und Sekundärströmungen minimiert ist. Weiterhin wird eine der Strömungsanordnung bzw. dem Übergangskanal nachgeordnete Komponente optimal angeströmt. Strömungsverluste werden so vermieden und der Wirkungsgrad der Gasturbine optimiert.

Vorzugsweise ist eine den Übergangskanal radial innen begrenzende Kanalwand und/oder eine den Übergangskanal radial außen begrenzende Kanalwand im Bereich der Strömungsaustrittskante der oder jeder, zwischen zwei benachbarten Stützrippen positionierten Leitrippe nach innen eingezogen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
Fig. 1 eine stark schematisierte Darstellung einer aus dem Stand der Technik bekannten Strömungsstruktur für eine Gasturbine, namlich einer Strömungsstruktur für einen Übergangskanal zwischen zwei Verdichterstufen;
Fig. 2 einen Querschnitt durch die aus dem Stand der Technik bekannte Strömungsstruktur der Fig. 1 im Bereich einer Nabe;
Fig. 3 eine stark schematisierte Darstellung einer erfindungsgemäßen Strömungsstruktur für eine Gasturbine, nämlich einer Strömungsstruktur für einen Übergangskanal zwischen zwei Verdichterstufen;
Fig. 4 einen Querschnitt durch die erfindungsgemäße Strömungsstruktur der Fig. 3 im Bereich einer Nabe; und
Fig. 5 einen Querschnitt durch die erfindungsgemäße Strömungsstruktur der Fig. 3 und 4 in Schnittrichtung v-v.

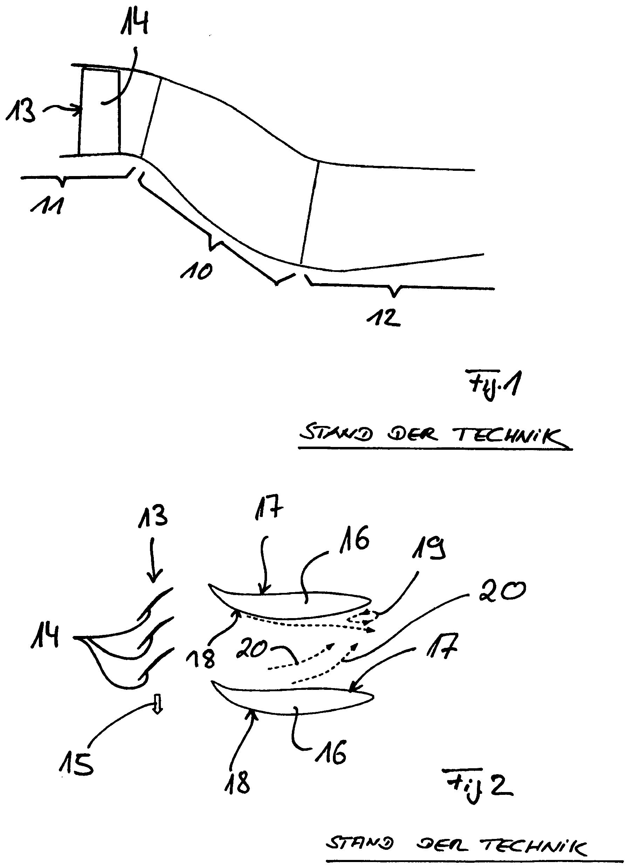

Fig. 1 und 2 zeigen stark schematisiert eine aus dem Stand der Technik bekannte Strömungsstruktur in einem Übergangskanal 10 zwischen einem Mit teldruckverdichter 11 bzw. einem Niederdruckverdichter und einem Hochdruckverdichter 12 eines als Gasturbine ausgebildeten Flugtriebwerks, wobei eine Gasströmung durch den Übergangskanal 10 vom Mitteldruckverdichter 11 bzw. Niederdruckverdichter in den Bereich des Hochdruckverdichters 12 geführt wird. Fig. 1 zeigt stark schematisiert, dass der Mitteldruckverdichter 11 im Bereich seiner in Strömungsrichtung gesehenen letzten Verdichterstufe von einem Laufschaufelkranz 13 abgeschlossen wird. Fig. 2 kann entnommen werden, dass der Laufschaufelkranz 13 von mehreren in Umfangsrichtung voneinander beabstandeten Laufschaufeln 14 gebildet wird, wobei die Drehrichtung des Laufschaufelkranzes 13 durch den Pfeil 15 visualisiert ist.

Wie insbesondere Fig. 2 entnommen werden kann, ist es aus dem Stand der Technik bereits bekannt, im Bereich des Übergangskanals 10 mehrere in Umfangsrichtung des Übergangskanals 10 voneinander beabstandete Stützrippen 16 anzuordnen. Die Stützrippen sind relativ dick sowie relativ lang ausgebildet und verfügen über ein kleines Höhenverhältnis. Gemäß Fig. 2 ist es aus dem Stand der Technik bereits bekannt, die Stützrippen 16 als strömungsumlenkende Stützrippen auszubilden und demnach deren Seitenflächen im Sinne einer Druckseite 17 sowie einer Saugseite 18 zu konturieren. Bei derartigen strömungsumlenkenden Stützrippen 16 besteht die Gefahr von Strömungsablösungen sowie die Gefahr der Ausbildung von Sekundärströmungen, wobei die Strömungsablösungen in Fig. 2 durch Pfeile 19 und die Sekundärströmungen durch Pfeile 20 visualisiert sind. Derartige Strömungsablösungen sowie Sekundärströmungen beeinträchtigen den Wirkungsgrad der Gasturbine und sind demnach insgesamt von Nachteil.

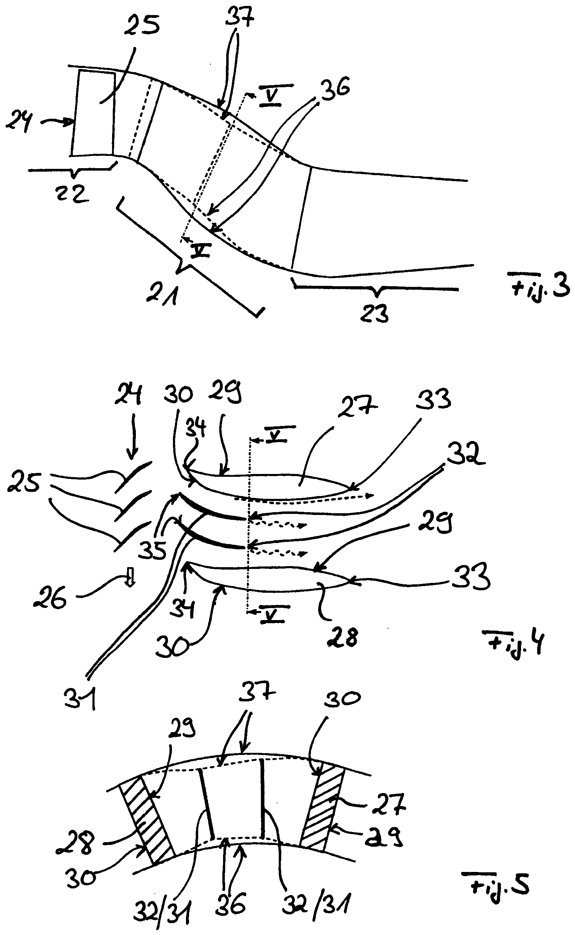

Fig. 3 bis 5 zeigen ein bevorzugtes Ausführungsbeispiel einer erfindungsgemäßen Strömungsstruktur für eine Gasturbine im Bereich eines Übergangskanals 21 zwischen einem Mitteldruckverdichter 22 bzw. einem Niederdruckverdichter und einem Hochdruckverdichter 23, wobei gemäß Fig. 3 der in Strömungsrichtung vor dem Übergangskanal 21 positionierte Mitteldruckverdichter 22 im Bereich seiner letzten Stufe wiederum von einem Laufschaufelkranz 24 abgeschlossen wird. Der Laufschaufelkranz 24 umfasst gemäß Fig. 4 mehrere in Umfangsrichtung voneinander beabstandete Laufschaufeln 25, wobei die Drehrichtung des Laufschaufelkranzes 24 bzw. der Laufschaufeln 25 durch einen Pfeil 26 visualisiert ist. Im Bereich des Übergangskanals 21 sind wiederum in Umfangsrichtung voneinander beabstandete Stützrippen 27 bzw. 28 angeordnet, wobei die Stützrippen 27 bzw. 28 eine Druckseite 29 sowie eine Saugseite 30 aufweisen und demnach strömungsumlenkend ausgebildet sind.

Im Sinne der hier vorliegenden Erfindung wird nun vorgeschlagen, zwischen jeweils zwei benachbarten, in Umfangsrichtung voneinander beabstandeten Stützrippen 27 bzw. 28 mindestens eine Leitschaufel bzw. Leitrippe 31 zu positionieren. Im Ausführungsbeispiel der Fig. 3 bis 5 sind zwischen den benachbarten Stützrippen 27 und 28 zwei Leitrippen 31 angeordnet. Im Sinne der Erfindung wird dabei vorgeschlagen, die Leitrippen 31 derart zwischen den Stützrippen 27, 28 anzuordnen, dass Strömungsaustrittskanten 32 der Leitrippen 31 stromaufwärts von Strömungsaustrittskanten 33 der Stützrippen 27 bzw. 28 verlaufen. Die Strömungsaustrittskanten 32 der Leitrippen 31 verlaufen dabei in einem Bereich, der ausgehend von einer Strömungseintrittskante 34 der Stützrippen 27 bzw. 28 zwischen 30 % und 50 % der Sehnenlänge der Stützrippen 27 bzw. 28 liegt. Die Leitrippen 31 sind demnach gegenüber dem Stützrippen 27 und 28 relativ kurz ausgebildet.

Im Sinne der hier vorliegenden Erfindung wird weiterhin vorgeschlagen, die Leitrippen 31 derart zwischen den Stützrippen 27 und 28 zu positionieren, dass Strömungseintrittskanten 35 der Leitrippen 31 geringfügig stromaufwärts der Strömungseintrittskanten 34 der Stützrippen 27 und 28 liegen. Die Strömungseintrittskanten 34 der Stützrippen 27 bzw. 28 verlaufen dabei ausgehend von Strömungseintrittskanten 35 der Leitrippen 31 in einem Bereich zwischen 5 % und 10 % der Sehnenlänge der Leitrippen 31.

Weiterhin liegt es im Sinne der hier vorliegenden Erfindung, zur Optimierung der Strömungsverhältnisse Wände des Übergangskanals 21 entsprechend zu konturieren. So kann insbesondere Fig. 3 und 5 entnommen werden, dass der Übergangskanal 21 nabenseitig von einer radial innenliegenden Kanalwand 36 und gehäuseseitig von einer radial außenliegenden Kanalwand 37 begrenzt wird. Im Sinne der hier vorliegenden Erfindung werden nun die Kanalwände 36 und 37 derart konturiert, dass dieselben im Bereich der Strömungsaustrittskante 32 der Leitrippen 31 unter Verengung des Strömungsquerschnitt nach innen eingezogen werden. Hierbei nehmen die Kanalwände 36 und 37 die in Fig. 3 und 5 gestrichelt dargestellte Kontur ein.

So kann insbesondere Fig. 5 entnommen werden, dass die Kanalwände 36 und 37 benachbart zur Saugseite 30 weniger stark nach innen eingezogen sind wie benachbart zur Druckseite 29 zweier benachbarter Stützrippen 27, 28. Hierdurch entsteht eine in Umfangsrichtung nicht-rotationssymmetrische Kontur der Kanalwände 36 und 37, welche im Hinblick auf eine Strömungsoptimierung besonders bevorzugt ist.

Im Sinne der hier vorliegenden Erfindung wird demnach vorgeschlagen, mindestens eine relativ kurze Leitrippe 31 zwischen jeweils zwei benachbarten Stützrippen 27, 28 zu positionieren, wobei die Leitrippen 31 gegenüber dem Stützrippen 27, 28 relativ kurz sowie relativ dünn ausgebildet sind. Die Strömungseintrittskanten 35 der Leitrippen 31 sind dabei geringfügig stromaufwärts der Strömungseintrittskanten 34 der Stützrippen 27, 28 angeordnet, die Strömungsaustrittskanten 32 der Leitrippen 31 verlaufen jedoch deutlich stromaufwärts der Strömungsaustrittskanten 33 der Stützrippen 27, 28. Die Sehnenlänge der Stützrippen 31 beträgt in etwa 30% bis 50% der Sehnenlänge der Stützrippen 27, 28. In dem Bereich der Strömungsaustrittskanten 32 der Leitrippen 31 werden Kanalwände 36 und 37 des Übergangskanals 21 nach innen eingezogen. Hierdurch entsteht eine in Umfangsrichtung nicht-rotationssymmetrische Seitenwandkontur des Übergangskanals.

Die erfindungsgemäße Strömungsstruktur kommt entweder zwischen zwei Verdichtern oder zwei Turbinen oder beim Turbinenaustrittsgehäuse stromabwärts der Niederdruckturbine zum Einsatz. Bevorzugt ist die Verwendung der erfindungsgemäßen Strömungsstruktur in einem Übergangskanal zwischen einem Mitteldruckverdichter und einem Hochdruckverdichter bzw. in einem Übergangskanal zwischen einer Hochdruckturbine und einer Niederdruckturbine sowie stromabwärts der Niederdruckturbine eines Flugtriebwerks. Besonders bevorzugt ist die Verwendung der Strömungsstruktur dann, wenn ein stromaufwärts des Übergangskanals positionierter Mitteldruckverdichter bzw. Niederdruckverdichter an der in Strömungsrichtung gesehen letzten bzw. an der stromabwärtigen Stufe von einem Laufschaufelkranz abgeschlossen wird. Hierdurch kann dann die Baulänge verkürzt werden. Es ist jedoch auch vorstellbar, die erfindungsgemäße Strömungsstruktur zu verwenden, wenn der stromaufwärts derselben positionierte Verdichter mit einem Leitschaufelkranz endet.

Die erfindungsgemäße Strömungsstruktur kann relativ preiswert als Gussbauteil hergestellt werden. Strömungsverluste im Übergangskanal werden deutlich reduziert. Es kann das sogenannte Austrittsleitrad beim stromaufliegenden Verdichter, das Austrittsleitrad bei der stromaufliegenden Niederdruckturbine oder das Eintrittsleitrad in die Niederdruckturbine eingespart werden. Hierdurch ergibt sich dann eine kompaktere und leichtere Bauform. Der Wirkungsgrad einer Gasturbine kann demnach effektiv gesteigert werden.

## Patentansprüche

1. Strömungsstruktur für einen Übergangskanal (21) einer Gasturbine mit in dem Übergangskanal (21) positionierten, in Umfangsrichtung des Übergangskanals (21) voneinander beabstandeten Stützrippen (27, 28), wobei zwischen jeweils zwei benachbarten, in Umfangsrichtung des Übergangskanals (21) voneinander beabstandeten Stützrippen (27, 28) mindestens eine Leitschaufel bzw. Leitrippe (31) positioniert ist, und wobei die Strömungsaustrittskante (32) der oder jeder Leitrippe (31) stromaufwärts der Strömungsaustrittskanten (33) der Stützrippen (27, 28) verläuft,
**dadurch gekennzeichnet,**
**dass** die Strömungseintrittskante (35) der oder jeder Leitrippe (31) stromaufwärts der Strömungseintrittskanten (34) der Stützrippen (27, 28) verlauft.

2. Strömungsstruktur nach Anspruch 1,
**dadurch gekennzeichnet,**
**dass** die Strömungsaustrittskante (32) der oder jeder Leitrippe (31) ausgehend von Strömungseintrittskanten (34) der Stützrippen (27, 28) in einem Bereich zwischen 30% bis 50% der Sehnenlänge der Stützrippen (27, 28) verläuft.

3. Strömungsstruktur nach Anspruch 1 oder 2,
**dadurch gekennzeichnet,**
**dass** die Strömungseintrittskanten (34) der Stützrippen (27, 28) ausgehend von Strömungseintrittskanten (35) der Leitrippen (31) in einem Bereich zwischen 5% bis 10% der Sehnenlänge der Leitrippen (31) verlaufen.

4. Strömungsstruktur nach einem der Ansprüche 1 bis 3,
**dadurch gekennzeichnet,**
**dass** die Leitrippen (31) gegenüber den Stützrippen (27, 28) relativ kurz und schlank ausgebildet sind.

5. Strömungsstruktur nach einem Ansprüche 1 bis 4,
**dadurch gekennzeichnet,**
**dass** die Stützrippen (27, 28) strömungsumlenkend mit einer Saugseite (30) und einer Druckseite (29) ausgebildet sind.

6. Stromungsstruktur nach einem der Ansprüche 1 bis 5,
**dadurch gekennzeichnet,**
**dass** eine den Übergangsksnal (21) radial innen begrenzende Kanalwand (36) und/oder eine den Übergangskanal radial außen begrenzende Kanalwand (37) im Bereich der Strömungsaustrittskante (32) der oder
jeder, zwischen zwei benachbarten Stützrippen (27, 28) positionierten Leitrippe (31) nach innen eingezogen ist.

7. Strömungsstruktur nach Anspruch 6,
**dadurch gekennzeichnet,**
**dass** die innere Kanalwand (36) und/oder die äußere Kanalwand (37) zwischen zwei benachbarten Stützrippen (27, 28) im Bereich einer Druckseite (29) einer Stützrippe (28) stärker eingezogen ist als in Bereich einer Saugseite (30) der benachbarten Stützrippe (27).

## Claims

1. A flow structure for a transition channel (21) of a gas turbine with supporting ribs (27, 28), positioned in the transition channel (21) and spaced apart from each other in the circumferential direction of the transition channel (21), wherein at least one guide blade or guide rib (31) is positioned between respectively two adjacent supporting ribs (27, 28) spaced apart from each other in the circumferential direction, and wherein the flow exit edge (32) of the one or each guide rib (31) extends upstream of the flow exit edges (33) of the supporting ribs (27, 28), **characterized in that**
the flow inlet edge (35) of the one or each guide rib (31) extends upstream of the flow inlet edges (34) of the supporting ribs (27, 28).

2. The flow structure according to Claim 1, **characterized in that**
the flow outlet edge (32) of the one or each guide rib (31) from the flow inlet edges (34) of the supporting ribs (27, 28) extends in a range between 30% to 50% of the chord length of the supporting ribs (27,28).

3. The flow structure according to Claim 1 or 2, **characterized in that**
the flow inlet edges (34) of the supporting ribs (27, 28) from the flow outlet edges (35) of the guide ribs (31) extend in a range between 5% to 10% of the chord length of the guide ribs (31).

4. The flow structure according to any one of Claims 1 to 3, **characterized in that**
the guide ribs (31) are designed relatively short and slim in comparison to the supporting ribs (27, 28).

5. The flow structure according to any ane of Claims 1 to 4, **characterized in that**
the supporting ribs (27, 28) are designed to be flow-reversing with a suction side (30) and a pressure side (29).

6. The flow structure according to any one of Claims 1 to 5, **characterized in that**
a channel wall (36), radially internally delimiting the transition channel (21) and/or a channel wall (37) radially externally delimiting the transition channel is drawn inwards in the region of the flow exit edge (32) of the one or each guide rib (31) positioned between two adjacent supporting ribs (27, 28).

7. The flow structure according to Claim 6, **characterized in that**
the inner channel wall (36) and/or the outer channel wall (37) is more strongly drawn in between two adjacent supporting ribs (27, 28) in the area of a pressure side (29) of a supporting rib (28) than in the area of a suction side (30) of the adjacent supporting rib (27).

## Revendications

1. Structure d'écoulement pour une canal de transition (21) d'une turbine à gaz avec des nervures d'appui (27, 28) espacées l'une de l'autre dans le sens périphérique du canal de transition (21), positionnées dans le canal de transition (21), dans laquelle entre respectivement deux nervures d'appui (27, 28) contigües, espacées l'une de l'autre dans le sens périphérique du canal de transition (21), au moins une pale de guidage ou nervure de guidage (31) est positionnée, et dans laquelle l'arête de sortie d'écoulement (32) de la ou chaque nervure de guidage (31) s'étend en amont des arêtes de sortie d'écoulement (33) des nervures d'appui (27, 28),
**caractérisée en ce que**
l'arête d'entrée d'écoulement (35) de la ou chaque nervure de guidage (31) s'étend en amont des arêtes d'entrée d'écoulement (34) des nervures d'appui (27, 28).

2. Structure d'écoulement selon la revendication 1,
**caractérisée en ce que**
l'arête de sortie d'écoulement (32) de la ou chaque nervure de guidage (31) s'étend à partir des arêtes d'entrée d'écoulement (34) des nervures d'appui (27, 28) dans une zone entre 30 jusqu'a 50% de la longueur de corde des nervures d'appui (27, 28).

3. Structure d'écoulement selon la revendication 1 ou 2,
**caractérisée en ce que**
les arêtes d'entrée d'écoulement (34) des nervures d'appui (27, 28) s'étendent à partir d'arêtes d'entrée d'écoulement (35) des nervures de guidage (31) dans une zone entre 5 jusqu'a 10 % de la longueur de corde des nervures de guidage (31).

4. Structure d'écoulement selon l'une quelconque des revendications 1 à 3,
**caractérisée en ce que**
les nervures de guidage (31) sont réalisées par rapport aux nervures d'appui (27, 28) relativement courtes et mincies.

5. Structure d'écoulement selon l'une quelconque des revendications 1 à 4,
**caractérisée en ce que**
les nervures d'appui (27, 28) sont réalisées de manière à renvoyer l'écoulement avec un côté d'aspiration (30) et un côté de refoulement (29).

6. Structure d'écoulement selon l'une quelconque des revendications 1 à 5,
**caractérisée en ce que**
une paroi de canal (36) délimitant le canal de transition (21) radialement vers l'intérieur et/ou une paroi de canal (37) délimitant radialement vers l'extérieur le canal de transition dans la zone de l'arête de sortie d'écoulement (32) de la ou chaque nervure de guidage (31) positionnée entre deux nervures d'appui (27,28) contigües, est intégrée vers l'intérieur.

7. Structure d'écoulement selon la revendication 6,
**caractérisée en ce que**
la paroi de canal intérieure (36) et/ou la paroi de canal extérieure (37) est intégrée plus fortement entre deux nervures d'appui contigües (27, 28) dans la zone d'un côté de refoulement (29) d'une nervure d'appui (28) que dans la zone d'un côté d'aspiration (30) de la nervure d'appui contigüe (27).
